# EUROPÄISCHE PATENTANMELDUNG

(11) **EP 3 562 115 A1**
(43) Veröffentlichungstag der Anmeldung: **30.10.2019**
(21) Anmeldenummer: 18169145.2
(22) Anmeldetag: 25.04.2018
(51) Int. Cl.: H04L 29/06, H04L 9/08

(54) **GESCHÜTZTE ÜBERTRAGUNG VON DATEN MIT HILFE POST-QUANTEN KRYPTOGRAPHIE**

(71) Anmelder: Siemens Aktiengesellschaft, 80333 München (DE)
(72) Erfinder: Falk, Rainer, 85586 Poing (DE)

(57) **Zusammenfassung**

Verfahren zur geschützten Übertragung von Daten zwischen einem ersten Gerät (100) und einem zweiten Gerät (200), mit den Verfahrensschritten:
- Aushandeln (S1) einer ersten Sicherheitsinformation (SKo) entsprechend einem ersten, Post-Quanten Kryptographie-Verfahren zwischen einer ersten Post-Quanten Funktionseinheit (102), die dem ersten Gerät (100) zugeordnet ist und einer zweiten Post-Quanten Funktionseinheit (202), die dem zweiten Gerät (200) zugeordnet ist,
- Aushandeln (S2) einer zweiten Sicherheitsinformation (SKi) entsprechend einem zweiten Kryptographie-Verfahren, wobei Daten des zweiten Kryptographie-Verfahrens, die zum Aushandeln der zweiten Sicherheitsinformation ausgetauscht werden, mit der ersten Sicherheitsinformation (SKo) kryptographisch geschützt zwischen dem ersten Gerät (100) und dem zweiten Gerät (200) übertragen werden.

## Beschreibung

Die Erfindung betrifft ein Verfahren, ein erstes Gerät, eine Post-Quanten-Einrichtung, eine Anordnung sowie ein Computerprogrammprodukt zur geschützten Übertragung von Daten zwischen einem ersten und einem zweiten Gerät gegen eine Manipulation durch Quantencomputer.

In Kommunikationsnetzen, insbesondere zum Austausch von Daten, ist eine vor Manipulation und Mithören geschützte Kommunikation wichtig. Dabei muss sichergestellt werden, dass es sich beim Sender der Daten tatsächlich um den vorgegebenen Sender handelt und die Daten bei der Übertragung nicht mitgehört oder verändert werden können. Um die Authentizität der Kommunikationspartner und die Integrität der Daten zu gewährleisten, sind Sicherheitsprotokolle für eine Authentifizierung und Schlüsselvereinbarung, auch als Authentication and Key Agreement AKA bezeichnet, bekannt. Insbesondere sind ein Internetschlüssel-Austauschprotokoll IKE für das sichere Internetprotokoll IPsec, eine Authentisierung und Schlüsselvereinbarung für das Transportschicht-Sicherheitsprotokoll TLS, auch als TLS Handshake bezeichnet, sowie unterschiedliche erweiterbare Authentisierungsprotokolle, wie beispielsweise EAP-TLS, EAP-TTLS, EAP-PEAP, EAP-MSChapv2, die von der Internettechnik-Arbeitsgruppe IETF standardisiert sind, zur Authentifizierung und Aushandlung eines Sitzungsschlüssels bekannt.

Diese heute weit eingesetzten Authentifizierungs- und Schlüsselvereinbarungsprotokolle sind jedoch nicht resistent gegenüber Angriffen mit Quantencomputern, da die üblicherweise darin verwendeten asymmetrischen kryptographischen Verfahren, wie beispielsweise asymmetrische Verfahren nach Rivest, Shamir and Adelman (RSA), ein digitaler Signaturalgorithmus DSA, Signaturen gemäß einem elliptischen Kurven-DSA-Verfahren oder ein Schlüsselaushandlungsverfahren nach Diffie-Hellman, angreifbar werden, wenn Quantencomputer verfügbar sind. Es könnten jedoch auch andere Angriffe auf die heute verwendeten kryptographischen Protokolle und Verfahren bekannt werden, so dass ein Wechsel auf neue beziehungsweise andere kryptographische Protokolle und Verfahren aus Datensicherheitssicht erforderlich wird.

Es sind unterschiedliche Post-Quanten Authentisierungs- und Schlüsselvereinbarungsprotokolle bekannt, beispielsweise wird ein als NEWHOPE bezeichnetes und im Internet unter der Adresse https://eprint.iacr.org/2015/1092.pdf beschriebenes unauthentisiertes Schlüsselaustauschprotokoll, die gegen Angriffe durch Quantencomputer resistent gelten.

Ein Wechsel auf solche Post-Quanten Kryptographie-Verfahren ist insbesondere in industriellen Datennetzen oft nicht praktikabel möglich, da verwendete Sicherheitsprotokolle aus regulatorischen Gründen, wie beispielsweise eine Sicherheitszertifizierung, nicht kurzfristig ausgetauscht werden können und die Geräte über einen langen Zeitraum, beispielsweise 10 oder 20 Jahre, verwendet werden sollen.

Von http://www.sig-switzerland.ch/wpcontent/uploads/2017/05/SIGS_TechCon2017_IDQQuantum-Safe_Security.pdf?_sm_au_=iVV28SS2PN80BWN5 , ist bekannt, die Datenverbindungen zwischen Rechenzentren mittels einer Quantenschlüsselverteilung (QKD) zu schützen, und auf den Endgeräten selbst Quanten-resistente Krypto-Algorithmen (QRA) zu verwenden. Die sehr aufwendig umzusetzende Quantenschlüsselverteilung muss daher nur zwischen Rechenzentren realisiert werden, nicht von den Geräten selbst.

Es ist somit die Aufgabe der vorliegenden Erfindung, eine gegen Manipulation durch Quantencomputer geschützte Übertragung von Daten ausgehend von Sicherheitslösungen in derzeit bestehenden Datennetzen praktikabel und flexibel realisieren zu können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zu einer gegen eine Manipulation durch Quantencomputer geschützten Übertragung von Daten zwischen einem ersten Gerät und einem zweiten Gerät. Dabei wird im ersten Verfahrensschritt eine erste Sicherheitsinformation entsprechend einem ersten Post-Quanten Kryptographie-Verfahren zwischen einer ersten Post-Quanten Funktionseinheit, die einem ersten Gerät zugeordnet ist, und einer zweiten Post-Quanten Funktionseinheit, die einem zweiten Gerät zugeordnet ist, ausgehandelt. In einem zweiten Verfahrensschritt wird eine zweite Sicherheitsinformation entsprechend einem zweiten Kryptographie-Verfahren ausgehandelt, wobei Daten des zweiten Kryptographie-Verfahrens die zum Aushandeln der zweiten Sicherheitsinformation ausgetauscht werden, mit der ersten Sicherheitsinformation kryptographisch geschützt zwischen dem ersten Gerät und dem zweiten Gerät übertragen werden.

Als Post-Quanten Kryptographie-Verfahren wird dabei ein Kryptographie-Verfahren bezeichnet, das im Gegensatz zu den meisten aktuell verwendeten asymmetrischen Kryptographie-Verfahren selbst unter Verwendung von Quantencomputern praktisch nicht zu entschlüsseln sind.

Eine Post-Quanten Funktionseinheit bezeichnet dabei eine Komponente, die beispielsweise aus einem oder mehreren Prozessoren besteht und derart ausgebildet ist Post-Quanten Kryptographie-Verfahren auszuführen. Zur Ausführung eines Post-Quanten Kryptographie-Verfahrens sind dabei ein oder mehrere Prozessoren mit derzeit üblicher Rechenleistung ausreichend. Daten, die zum Aushandeln der zweiten Sicherheitsinformation ausgetauscht werden, sind insbesondere Nachrichten des zweiten Kryptographie-Verfahrens, die in den entsprechenden Spezifikationen zum Austausch von Information zwischen dem ersten und dem zweiten Gerät beschrieben sind.

Vorteilhafter Weise wird im erfindungsgemäßen Verfahren lediglich ein Post-Quanten Kryptographie-Verfahren ausgeführt und mit der dabei ermittelten ersten Sicherheitsinformation ein gegen Quantencomputer sicherer Datentunnel aufgebaut. Innerhalb dieses Datentunnels kann nun ein zweites Kryptographie-Verfahren ebenfalls geschützt gegen eine Manipulation durch Quantencomputer ausgeführt werden. Die in diesem zweiten Kryptographie-Verfahren ausgehandelte zweite Sicherheitsinformation ist somit insbesondere nicht durch Quantencomputer auslesbar und kann im ersten sowie im zweiten Gerät zum symmetrischen Verschlüsseln von Daten verwendet werden.

In einer vorteilhaften Ausführungsform sind das erste Kryptographie-Verfahren und das zweite Kryptographie-Verfahren ein Authentisierungs- und/oder Schlüsselverteilungsverfahren.

Das erste Kryptographie-Verfahren ist somit ein Post-Quanten Authentisierungs- und/oder Schlüsselverteilungsverfahren, das eine vor Manipulation durch Quantencomputer geschützte Authentifizierung des ersten und/oder zweiten Gerätes bereitstellt. Die mit dem Post-Quanten Authentisierungs- und/oder Schlüsselverteilungsverfahren zwischen dem ersten und zweiten Gerät ausgehandelten Schlüssel sind ebenfalls gegen einen Angriff durch Quantencomputer sicher. Insbesondere kann ein durch Post-Quanten Kryptographie geschützter Tunnel mittels eines Post-Quanten Authentisierungs- und Schlüsselvereinbarungsprotokolls, wie beispielsweise einem NEWHOPE-Verfahren, eingerichtet sein.

In einer vorteilhaften Ausführungsform werden weitere Daten, die nach dem Aushandeln der zweiten Sicherheitsinformation ausgetauscht werden, vom ersten und zweiten Gerät mit der zweiten Sicherheitsinformation verschlüsselt und zwischen dem ersten und zweiten Gerät übertragen.

Das erste und auch zweite Kryptographie-Verfahren werden beim Aufbau einer Datenverbindung ausgeführt. Nach Ausführung des zweiten Kryptographie-Verfahrens, insbesondere nach Aushandlung eines Sitzungsschlüssels als zweiter Sicherheitsinformation durch ein zweites Authentifizierungs- und/oder Schlüsselaustauschverfahren, ist die zweite Sicherheitsinformation dem ersten und zweiten Gerät bekannt. Alle weiteren Daten, die nun nach der Aushandlung der zweiten Sicherheitsinformation durch das zweite Kryptographie-Verfahren auf dieser Datenverbindung übertragen werden sollen, werden nun durch die auf dem ersten und zweiten Gerät gleiche zweite Sicherheitsinformation verschlüsselt. Es handelt sich somit um eine symmetrische Verschlüsselung. Die zweite Sicherheitsinformation ist somit bevorzugterweise ein Sitzungsschlüssel, der in einem symmetrischen Verschlüsselungsverfahren wie den vorgenannten RSA- oder DSA-Verfahren verwendet wird. Symmetrische Verschlüsselungsverfahren gelten als sicher gegenüber Manipulation durch Quantencomputer, da hier mittels spezieller Algorithmen, wie beispielsweise einem Grover-Algorithmus, eine in Bit gemessene Sicherheit eines Schlüssels lediglich um die Hälfte reduziert würde. Einer höheren verfügbaren Rechenleistung ließe sich mit entsprechend längeren Schlüsseln entgegenwirken. Somit bleibt auch die Übertragung weiterer Daten, beispielsweise Nutzdaten, die mit der zweiten Sicherheitsinformation verschlüsselt zwischen dem ersten und zweiten Gerät übertragen werden, manipulationssicher.

In einer vorteilhaften Ausführungsform wird eine dritte Sicherheitsinformation abhängig von der ersten Sicherheitsinformation und abhängig von der zweiten Sicherheitsinformation ermittelt und weitere Daten, die nach dem Aushandeln der zweiten Sicherheitsinformation ausgetauscht werden, vom ersten und vom zweiten Gerät mit der dritten Sicherheitsinformation verschlüsselt und zwischen dem ersten Gerät und dem zweiten Gerät übertragen.

Durch die Berücksichtigung sowohl der ersten als auch der zweiten Sicherheitsinformation bei der Ermittlung der dritten Sicherheitsinformation ist eine verbesserte Sicherheit erreichbar. Eventuell bekannte Sicherheitslücken des zweiten Kryptographie-Verfahrens können dadurch geschlossen werden. Die weiteren Daten, die nach dem Aushandeln der zweiten Sicherheitsinformation ausgetauscht werden, werden somit in einer besonders gut geschützten Ende-zu-Ende Kommunikationsverbindung übertragen.

In einer vorteilhaften Ausführungsform ist das zweite Kryptographie-Verfahren ein nicht-Post-Quanten Kryptographie-Verfahren.

Ein solches zweites nicht-Post-Quanten Kryptographie-Verfahren kann beispielsweise eines der vorgenannten herkömmlichen und bekannten Authentisierungs- und Schlüsselvereinbarungsverfahren, wie beispielsweise IKE oder ein TLS-Handshake sein. Somit können herkömmlich verwendete Verfahren beim Aufbau einer sicheren Kommunikationsverbindung beibehalten werden und müssen nicht aufwändig und oftmals nicht praktikabel auf ein Post-Quanten Kryptographie-Verfahren aufgerüstet werden.

In einer vorteilhaften Ausführungsform ist das zweite Kryptographie-Verfahren ein asymmetrisches Kryptographie-Verfahren und die ausgehandelte zweite Sicherheitsinformation ein Sitzungsschlüssel, der sowohl im ersten als auch im zweiten Gerät zur Verschlüsselung von Daten verwendet wird.

Unter Verschlüsselung wird hierbei ein kryptographischer Schutz der Verbindung verstanden. Dabei kann die Vertraulichkeit und/oder Integrität der übertragenen Daten geschützt werden. Bei einer verschlüsselten Übertragung von Nutzdaten, z.B. Steuerdaten oder Sensordaten, können die Nutzdaten nur entschlüsselt werden, wenn der verwendete kryptographische Schlüssel vorliegt. Bei integritätsgeschützten Übertragung von Nutzdaten können die die Integrität schützenden kryptographischen Prüfsummen (Nachrichtenauthentisierungscode, Message Authentication Code) nur überprüft werden, wenn der verwendete kryptographische Schlüssel vorliegt.

In einer vorteilhaften Ausführungsform wird vor dem Aushandeln der zweiten Sicherheitsinformation geprüft, ob das erste Kryptographie-Verfahren zur Aushandlung der ersten Sicherheitsinformation verwendet wurde.

Dadurch kann sichergestellt werden, dass nur dann das zweite, nicht-Post-Quanten Kryptographie-Verfahren ausgeführt wird, wenn es durch einen Post-Quanten Tunnel aufgebaut wurde. Ein Post-Quanten Tunnel ist dabei eine andere Bezeichnung dafür, dass Daten mit der ersten Sicherheitsinformation des Post-Quanten Kryptographie-Verfahrens verschlüsselt zwischen dem ersten und zweiten Gerät übertragen werden. Insbesondere werden in dem Post-Quanten Tunnel die beim zweiten Kryptographie-Verfahren ausgetauschten Nachrichten mit der ersten Sicherheitsinformation verschlüsselt übertragen.

In einer vorteilhaften Ausführungsform wird beim ersten und/oder zweiten Kryptographie-Verfahren eine Identifizierungsdatenstruktur übermittelt, die Information über das jeweils andere Kryptographie-Verfahren enthält.

So kann beispielsweise eine Identifizierungsdatenstruktur im zweiten Kryptographie-Verfahren eine Kryptokennung enthalten, die das erste verwendete Kryptographie-Verfahren identifiziert, sowie einen Hashwert und insbesondere eine Bestätigung der enthaltenen Information umfassen. Die Bestätigung kann beispielsweise durch eine digitale Signatur mit einem Schlüssel des Post-Quanten Kryptographie-Verfahrens ausgebildet sein. Damit kann beispielsweise bestätigt werden, dass das zweite Kryptographie-Verfahren durch einen Post-Quanten Tunnel geschützt ausgeführt wurde. Die Identifizierungsdatenstruktur kann im ersten sowie im zweiten Gerät erstellt beziehungsweise ausgewertet werden und abhängig von der Überprüfung der Information in der Identifizierungsdatenstruktur können unterschiedliche Maßnahmen ausgelöst werden. Beispielsweise kann eine Meldung generiert und an eine Überwachung übertragen werden. Es kann auch eine Übertragung weiterer Daten eingeschränkt oder blockiert werden.

Ein zweiter Aspekt der Erfindung betrifft ein erstes Gerät zur geschützten Übertragung von Daten an ein zweites Gerät gegen eine Manipulation des Quantencomputers, umfassend eine Post-Quanten Funktionseinheit, die derart ausgebildet ist, eine erste Sicherheitsinformation entsprechend einem Post-Quanten Kryptographie-Verfahren mit einem zweiten Post-Quanten Funktionseinheit, die einem zweiten Gerät zugeordnet ist, auszuhandeln, und eine Steuerungseinrichtung, die derart ausgebildet ist, eine zweite Sicherheitsinformation entsprechend einem zweiten Kryptographie-Verfahren mit einer zweiten Steuerungseinrichtung eines zweiten Geräts auszuhandeln und Daten des zweiten Kryptographie-Verfahrens, die zum Aushandeln der zweiten Sicherheitsinformation ausgetauscht werden, mit der ersten Sicherheitsinformation kryptographisch geschützt zwischen dem ersten Gerät und dem zweiten Gerät zu übertragen.

Ein solches Gerät hat den Vorteil, dass eine Kommunikationsverbindung zu einem zweiten Gerät gegen Manipulation durch Quantencomputer geschützt ist, wobei lediglich die Post-Quanten Funktionseinheit neue, eventuell rasch wechselnde Post-Quanten Kryptographie-Verfahren unterstützen muss. An der Steuerungseinrichtung, die bekannte zweite Kryptographie-Verfahren ausführt und steuert, sind somit keine oder lediglich geringe Anpassungen für das verwendete Post-Quanten Kryptographie-Verfahren erforderlich.

Ein dritter Aspekt der Erfindung betrifft eine Post-Quanten-Einrichtung zur geschützten Übertragung von Daten zwischen einem ersten Gerät und einem zweiten Gerät gegen eine Manipulation durch Quantencomputer, umfassend eine Post-Quanten Funktionseinheit, die mindestens einem ersten Gerät zugeordnet ist und die derart ausgebildet ist, eine erste Sicherheitsinformation entsprechend einem Post-Quanten Kryptographie-Verfahren mit einer zweiten Post-Quanten Funktionseinheit, die einem zweiten Gerät zugeordnet ist, auszuhandeln und eine Übertragungseinheit, die derart ausgebildet ist, Daten entsprechend dem Post-Quanten Kryptographie-Verfahren an das zweite Gerät zu senden und/oder zu empfangen und die erste Sicherheitsinformation an das zugeordnete erste Gerät bereitzustellen.

Vorteilhafterweise ist eine solche Post-Quanten-Einrichtung als eigenständige Funktion außerhalb des ersten oder zweiten Gerätes betreibbar und kann das Post-Quanten Kryptographie-Verfahren für ein oder mehrere zugeordnete Geräte durchzuführen. Dies ermöglicht eine einfache Migration von herkömmlichen Kryptographie-Verfahren zu Post-Quanten Kryptographie-Verfahren. Die Post-Quanten-Einrichtung ist kostengünstig, da für eine Vielzahl von Geräten ein Tunnel oder mehrere Tunnel durch die Post-Quanten-Einrichtung eingerichtet werden können. Eine solche Post-Quanten-Einrichtung kann einfach in ein bestehendes Kommunikationsnetz integriert werden. Ein erstes Gerät kann in einer Kommunikation als zweites Gerät ausgebildet sein.

Ein fünfter Aspekt der Erfindung betrifft eine Anordnung zur geschützten Übertragung von Daten zwischen einem ersten Gerät und einem zweiten Gerät gegen eine Manipulation durch Quantencomputer, umfassend ein erstes Gerät, ein zweites Gerät sowie jeweils eine dem ersten beziehungsweise dem zweiten Gerät zugeordnete Post-Quanten Funktionseinheit, die derart ausgebildet sind, das erfindungsgemäße Verfahren durchzuführen.

Ein sechster Aspekt der Erfindung betrifft ein Computerprogrammprodukt, das direkt in einen Speicher eines digitalen Computers ladbar ist, umfassend Programmcodeteile, die dazu geeignet sind, die Schritte des erfindungsgemäßen Verfahrens durchzuführen.

Ein Computerprogrammprodukt, wie zum Beispiel ein Computerprogramm-Mittel, kann beispielsweise als Speichermedium, wie zum Beispiel eine Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens sowie des erfindungsgemäßen ersten Geräts, der Post-Quanten-Einrichtungen sowie der Anordnung sind in den Zeichnungen beispielhaft dargestellt und werden anhand der nachfolgenden Beschreibung näher erläutert. Es zeigen:
- Figur 1: ein erstes Kommunikationsszenario mit jeweils einem ersten Ausführungsbeispiel eines erfindungsgemäßen ersten und zweiten Gerätes in Blockdarstellung sowie dem erfindungsgemäßen Verfahren in schematischer Darstellung;
- Figur 2: ein zweites Kommunikationsszenario mit einem jeweils zweiten Ausführungsbeispiel eines erfindungsgemäßen ersten Geräts und einer Post-Quanten-Einrichtung in Blockdarstellung sowie des erfindungsgemäßen Verfahrens in schematischer Darstellung;
- Figur 3: ein drittes Kommunikationsszenario mit einem dritten Ausführungsbeispiel insbesondere des erfindungsgemäßen Verfahrens in schematischer Darstellung; und
- Figur 4: eines Kommunikationsnetzwerks mit mehreren Ausführungsbeispielen von Verbindungsszenarien zwischen Post-Quanten Funktionseinheiten in Blockdarstellung.

Einander entsprechende Teile sind in allen Figuren mit den gleichen Bezugszeichen versehen.

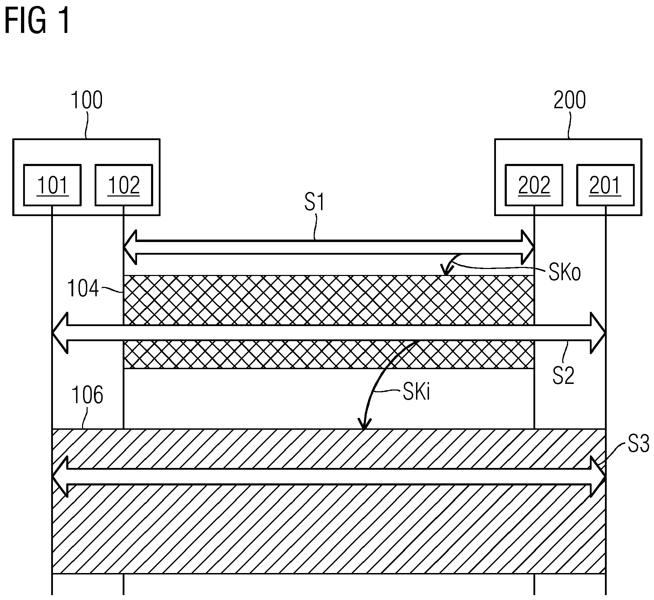

Figur 1 zeigt ein Kommunikationsszenario, in dem ein Verfahren zur geschützten Übertragung von Daten zwischen dem ersten Gerät 100 und einem zweiten Gerät 200 dargestellt ist. Das erste Gerät 100 umfasst eine Post-Quanten Funktionseinheit 102, die derart ausgebildet ist, eine erste Sicherheitsinformation SKo entsprechend einem ersten, Post-Quanten Kryptographie-Verfahren mit einer zweiten Post-Quanten-Einrichtung 202, die im zweiten Gerät 200 angeordnet ist, auszuhandeln. Dieser Verfahrensschritt ist als Doppelpfeil S1 dargestellt. Das erste Post-Quanten Kryptographie-Verfahren ist insbesondere eine Post-Quanten Authentifizierungs- und/oder Schlüsselvereinbarungsverfahren, das eine gegen Manipulation eines Quantencomputers sichere Authentifizierung des ersten Geräts beim zweiten Gerät und optional eine Authentisierung des zweiten Geräts beim ersten Gerät 100 durchführt. Neben der Authentifizierung stellt das erste Kryptographie-Verfahren eine Quantencomputer-sichere Schlüsselvereinbarung zwischen dem ersten Gerät 100 und dem zweiten Gerät 200 bereit. Dabei wird eine erste Sicherheitsinformation SKo, insbesondere ein erster Sitzungsschlüssel, zwischen dem ersten Gerät 100 und dem zweiten Gerät 200 ausgehandelt und sowohl dem ersten Gerät 100 als auch dem zweiten Gerät 200 bereitgestellt und dort gespeichert.

Anschließend wird mit Hilfe eines zweiten Kryptographie-Verfahrens im Verfahrensschritt S2 eine zweite Sicherheitsinformation SKi zwischen dem ersten Gerät 100 und dem zweiten Gerät 200 ausgehandelt. Das zweite Kryptographie-Verfahren ist insbesondere ein Authentifizierungs- und/oder Schlüsselvereinbarungsverfahren, das die Authentifizierung und Schlüsselvereinbarung mittels eines asymmetrischen Kryptographie-Verfahrens durchführt, bei dem jeweils Schlüsselpaare aus einem privaten Schlüssel und einem zugeordneten öffentlichen Schlüssel durchgeführt werden.

Dabei werden Daten, die zum Aushandeln der zweiten Sicherheitsinformation SKi zwischen dem ersten Gerät 100 und dem zweiten Gerät 200 ausgetauscht werden, mit Hilfe der ersten Sicherheitsinformation SKo verschlüsselt. Mit anderen Worten, wird ein Post-Quanten Tunnel 104 durch die Verwendung der ersten Sicherheitsinformation SKo zur Verschlüsselung der ausgetauschten Daten aufgebaut. Diese ausgetauschten Daten sind Nachrichten entsprechend dem verwendeten zweiten Kryptographie-Verfahren, beispielsweise IKE oder einem TLS-Handshake. Die im zweiten Kryptographie-Verfahren ausgehandelte zweite Sicherheitsinformation SKi ist insbesondere ein Sitzungsschlüssel SKo. Das zweite Kryptographie-Verfahren wird insbesondere zwischen einer Steuerungseinrichtung 101 im ersten Gerät 100 und einer Steuerungseinrichtung 201 im zweiten Gerät 200 ausgeführt.

Die zweite Sicherheitsinformation SKi wird nun zur Verschlüsselung von weiteren Daten verwendet, die zwischen dem ersten Gerät 100 und dem zweiten Gerät 200 im Verfahrensschritt S3 ausgetauscht werden. Die Verschlüsselung durch die zweite Sicherheitsinformation SKi kann auch als die Bereitstellung eines Ende-zu-Ende Tunnels 106 zum Schutz der Übertragung der weiteren Daten bezeichnet werden.

Im ersten Gerät 100 und im zweiten Gerät 200 wird die gleiche erste Sicherheitsinformation SKo zur symmetrischen Verschlüsselung der nachfolgend übertragenen Daten verwendet. In gleicher Weise wird die zweite Sicherheitsinformation SKi zur symmetrischen Verschlüsselung der weiteren Daten verwendet.

Da die Aushandlung der zweiten Sicherheitsinformation SKi durch das erste Post-Quanten Kryptographie-Verfahren geschützt abläuft, kann das nicht Quantencomputer-sichere, herkömmliche zweite Kryptographie-Verfahren nicht durch Quantencomputer manipuliert werden. Der weitere Datenaustausch in einer Ende-zu-Ende Verbindung zwischen der ersten Steuerfunkton 101 des ersten Gerätes 100 und der Steuereinrichtung 201 des zweiten Geräts 200, die nun mit einem symmetrischen Kryptographie-Verfahren geschützt ist, kann ebenso nicht durch einen Quantencomputer manipuliert werden. Somit ist ein durchgehender Schutz vor Manipulation durch einen Quantencomputer gegeben.

Die erste Sicherheitsinformation SKo kann zur Aushandlung mehrerer zweiter Sicherheitsinformationen SKi verwendet werden. Mit anderen Worten kann der Post-Quanten geschützte Tunnel 104 zur Aushandlung mehrerer zweiter Sicherheitsinformationen SKi und somit zum Aufbau mehrerer Verbindungen, verwendet werden. Der Post-Quanten geschützte Tunnel 104 muss entsprechend nicht nach einer ersten Aushandlung einer zweiten Sicherheitsinformation SKi im Schritt S2 abgebaut werden, sondern kann für den Aufbau mehrerer geschützter Kommunikationsverbindungen S3 verwendet werden. Bei jedem Verbindungsaufbau durch das zweite Kryptographie-Verfahren S2 wird beispielsweise eine neue, zweite Sicherheitsinformation SKi ermittelt und für die geschützte Übertragung der Nutzdaten in einem Ende-zu-Ende-Tunnel 106 verwendet werden.

Im ersten Gerät 100 kann beispielsweise die Post-Quanten Funktionseinheit 102 als ein Anwendungsprogramm auf dem Gerät 100 realisiert sein. Im zweiten Gerät 200 kann ebenfalls die Post-Quanten Funktionseinheit 202 als Anwendungsprogramm realisiert sein. Dies hat den Vorteil, dass ein solches Post-Quanten Anwendungsprogramm unabhängig von der eigentlichen Steuerungseinrichtung 101, 201 und dem darin realisierten zweiten Kryptographie-Verfahren entwickelt und aktualisiert werden. Dies ist insbesondere bei langlebigen Geräten vorteilhaft, da derzeit nicht verlässlich abgeschätzt werden kann, welche Post-Quanten Kryptographie-Verfahren sich durchsetzen werden.

Der Post-Quanten geschützte Tunnel 104 wird vorzugsweise ausschließlich für den Schutz des zweiten Kryptographie-Verfahrens verwendet. Weitere Daten wie beispielsweise Nutzdaten werden dagegen vorzugsweise nicht über den zusätzlichen Post-Quanten geschützten Tunnel 104 übertragen. Dadurch wird eine hohe Effizienz bei gleichzeitigem Schutz gegen Quantencomputer erreicht. Insbesondere gibt es keine Performance-Auswirkungen wie beispielsweise eine Verlängerung der Bearbeitungszeit bei der Übertragung der Nutzdaten. Somit können beispielsweise Echtzeit-kritische Steuerkommandos weiterhin entsprechend den Echtzeitanforderungen übertragen werden. Die weiteren Daten, insbesondere Nutzdaten, werden also nach wie vor lediglich durch die zweite Sicherheitsinformation SKi geschützt im Ende-zu-Ende Tunnel 106 übertragen.

Das erste Kryptographie-Verfahren und deren Sicherheitsinformation SKo sind unabhängig vom zweiten Kryptographie-Verfahren aktualisierbar. Das erste, Post-Quanten Kryptographie-Verfahren kann eine Identifizierungsdatenstruktur mit Information zum zweiten Kryptographie-Verfahren zwischen dem ersten Gerät 100 und dem zweiten Gerät 200 austauschen. Beispielsweise kann die Identifizierungsdatenstruktur Information zu denjenigen zweiten Kryptographie-Verfahren enthalten, die durch das erste Kryptographie-Verfahren unterstützt werden. Eine solche Identifizierungsdatenstruktur kann beispielsweise für jedes unterstützte zweite Kryptographie-Verfahren eine Kennung sowie einen Hashwert und insbesondere eine Bestätigung der enthaltenen Information durch beispielsweise eine digitale Signatur oder einen kryptographischen Authentisierungscode enthalten. Eine ähnliche Identifizierungsdatenstruktur kann im zweiten Kryptographie-Verfahren übermittelt werden. Darin kann beispielsweise bestätigt werden, durch welches erste Kryptographie-Verfahren das zweite Kryptographie-Verfahren geschützt wurde. Die Identifizierungsdatenstruktur kann jeweils im ersten und/oder im zweiten Gerät 200 überprüft werden. Beispielsweise wird lediglich dann das zweite Kryptographie-Verfahren ausgeführt, wenn eine erfolgreiche Durchführung des ersten Kryptographie-Verfahrens durch die Identifizierungsdatenstruktur bestätigt wird. Abhängig von der Auswertung der Identifizierungsdatenstruktur können weitere Maßnahmen ausgelöst werden.

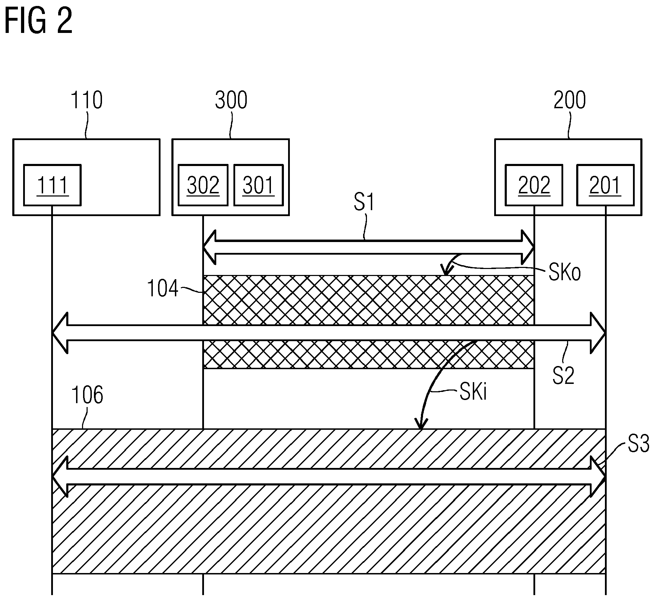

In Figur 2 ist ein weiteres Kommunikationsszenario dargestellt. Das erste Gerät 110 umfasst dabei lediglich eine Steuerungseinrichtung 111. Eine Post-Quanten-Einrichtung 300 ist dem ersten Gerät 110 zugeordnet. Die Post-Quanten-Einrichtung 300 umfasst eine Post-Quanten Funktionseinheit 302 sowie eine Übertragungseinheit 301. Die Post-Quanten-Funktionseinheit 302 in der Post-Quanten-Einrichtung 300 übernimmt nun das Aushandeln der ersten Sicherheitsinformation SKo mit der Post-Quanten Funktionseinheit 202 des zweiten Gerätes 200. Die Übertragungseinheit 301 der Post-Quanten-Einrichtung 300 ist derart ausgebildet, Daten entsprechend einem Post-Quanten Kryptographie-Verfahren an das zweites Gerät 200 zu senden und/oder zu empfangen. Die Übertragungseinheit 301 stellt zudem weitere Information dem zugeordneten ersten Gerät 110 bereit.

Der Post-Quanten geschützte Tunnel 104 zum Schutz des zweiten Kryptographie-Verfahrens wird so durch ein Vorschaltgerät in Form der Post-Quanten-Einrichtung 300 realisiert.

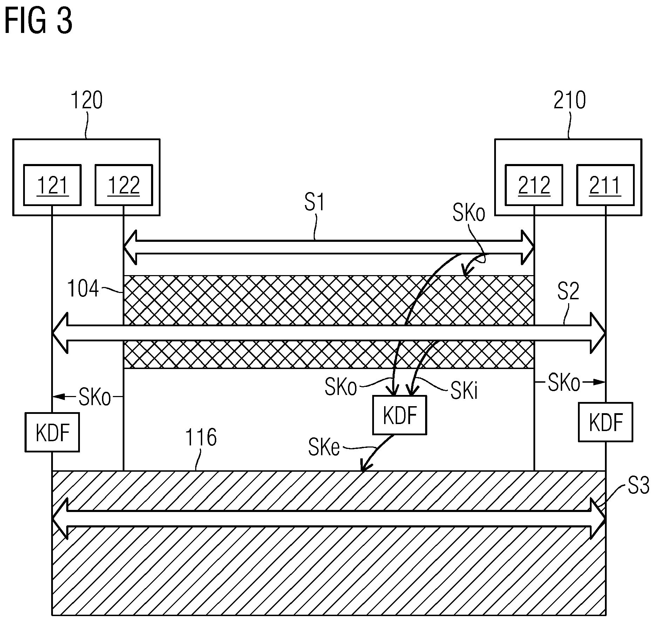

Figur 3 zeigt ein drittes Kommunikationsszenario, in dem zwischen einem ersten Gerät 120 und einem zweiten Gerät 210 ein vor Manipulation durch einen Quantencomputer sicherer Verbindungsaufbau durchgeführt wird. Wie bereits zu Figur 1 beschrieben, wird im Verfahrensschritt S1 eine erste Sicherheitsinformation SKo zur Bereitstellung eines Post-Quanten geschützten Tunnels 104 ausgehandelt. Entsprechend dem bereits beschriebenen Verfahrensschritt S2 wird zwischen der Steuerungseinrichtungen 121 des ersten Geräts 120 und der Steuerungseinrichtungen 211 des zweiten Geräts 210 die zweite Sicherheitsinformation SKi ausgehandelt. Zur Übertragung weiterer Daten, die nach dem Aushandeln der zweiten Sicherheitsinformation SKi ausgetauscht werden, wird jedoch eine dritte Sicherheitsinformation SKe verwendet. Der Ende-zu-Ende Tunnel 116 zwischen dem ersten Gerät 120 und dem zweiten Gerät 210 zur sicheren Übertragung der Nutzdaten S3 wird somit durch die dritte Sicherheitsinformation SKe, die beispielsweise durch eine Schlüsselableitungsfunktion KDF erzeugt wird, realisiert. Die dritte Sicherheitsinformation SKe kann beispielsweise durch einen Keyed Hash Nachrichtenauthentisierungscode verbunden mit einem sicheren Hash-Algorithmus HMAC-SHA256 oder lediglich einem sicheren Hash-Algorithmus gemäß den nachfolgenden Funktionen erstellt werden:
SKe:= HMAC-SHA256(SKo, SKi)
   oder
SKe:= SHA3(SKo∥SKi)

Dazu wird die erste Sicherheitsinformation SKo von der ersten Post-Quanten Funktionseinheit 122 des ersten Geräts 120 an die Steuerungseinrichtung 121 bereitgestellt. In gleicher Weise wird die erste Sicherheitsinformation SKo von der ersten Post-Quanten Funktionseinheit 212 des zweiten Geräts an die Steuerungseinrichtung 211 des zweiten Geräts bereitgestellt. Die Steuerungseinheit 121 beziehungsweise 211 sind derart ausgebildet, die Schlüsselableitungsfunktion KDF durchzuführen und die von den Sicherheitseinrichtungen 121, 211 ausgehandelte zweite Sicherheitsinformation SKi bereitzustellen. Über die Schlüsselableitungsfunktion KDF wird abhängig von der ersten Sicherheitsinformation SKo sowie der zweiten Sicherheitsinformation SKi eine dritte Sicherheitsinformation SKe für die Verschlüsselung der weiteren Daten ermittelt. Die zwischen dem ersten und zweiten Gerät dargestellte Schlüsselableitungsfunktion KDF verdeutlicht lediglich symbolisch die beteiligten Komponenten und Sicherheitsinformationen.

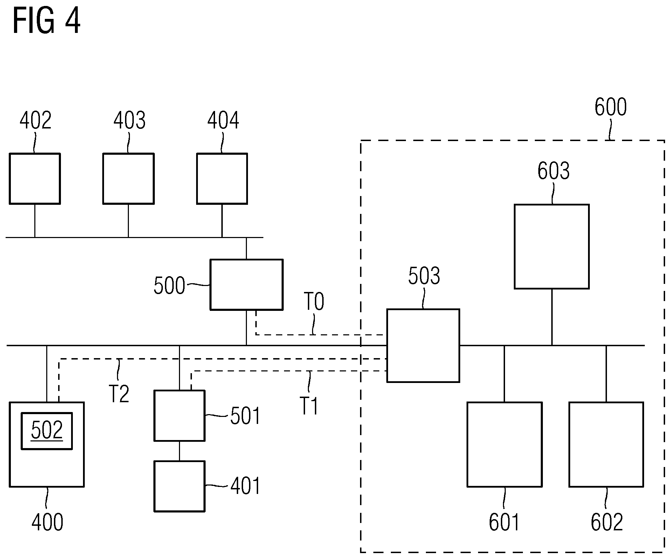

Figur 4 zeigt verschiedene Konfigurationsmöglichkeiten eines Kommunikationsnetzes, die den Aufbau einer Post-Quanten geschützten Kommunikationsverbindung ermöglichen. Im linken Teil des Kommunikationsnetzes sind erste Geräte 400, 401, 402, 403, 404 angeordnet, die Daten mit beispielsweise einem Steuerungsserver 603, einem Diagnoseserver 601 oder einem Logserver 602 austauschen. Die Server 601, 602, 603 sind beispielsweise in einer geteilten Serverumgebung 600, auch als Cloud bezeichnet, angeordnet. Den Servern 601,...,603 ist eine Post-Quanten Funktionseinheit 503 zugeordnet.

Den ersten Geräten 402, 403, 404 ist eine zweite Post-Quanten-Einrichtung 500 zugeordnet, die mit der ersten Post-Quanten-Einrichtung 503 eine erste Sicherheitsinformation SKi aushandelt und somit einen ersten Post-Quanten geschützten Tunnel T0 bereitstellt. Über diesen Post-Quanten geschützten Tunnel T0 werden eine oder mehrere Kommunikationsverbindungen zwischen einem ersten Geräte 402, 403, 404 und einem Server 601, 602, 603 im geteilten Serverbereich 600 aufgebaut. Das erste Gerät 400 umfasst eine integrierte Post-Quanten Funktionseinheit 502, die einen Post-Quanten geschützten Tunnel T2 mit der Post-Quanten-Einrichtung 503 aufbaut.

Dem ersten Gerät 401 ist dediziert eine Post-Quanten Einrichtung 501 zugeordnet, die mit der Post-Quanten-Einrichtung 503 eine erste Sicherheitsinformation SKi zum Aufbau des Tunnels T1 aushandelt.

Das beschriebene Verfahren ermöglicht eine sanfte Migration auf Post-Quanten Kryptographie-Verfahren, insbesondere für industrielle Automatisierungs- und Steuerungssysteme mit langer Nutzungsdauer. Die Post-Quanten Algorithmen können unabhängig von den Sicherheitsfunktionen wie dem zweiten Kryptographieverfahren der Steuerungseinheit 101, 111, 121 integriert werden. Dadurch können vorhandene Berechtigungsinformationen wie beispielsweise ein Gerätezertifikat und Implementierungen der Steuerungsfunktion unverändert weiter verwendet werden. Der über die erste Sicherheitsinformation SKi aufgebaute Post-Quanten geschützte Tunnel T0, T1, T2 verwendet unabhängige Post-Quanten Berechtigungsinformationen, so genannte Credentials. Für den Aufbau einer Nutzdatenverbindung S3 beziehungsweise zur Übertragung der weiteren Daten muss zwar gegebenenfalls eine Cipher Suite konfiguriert werden, die eine zweite Schlüsselinformation SKo mit einem symmetrischen Schlüssel mit höherer Schlüssellänge konfiguriert werden, aber ansonsten kann eine vorhandene Implementierung unverändert weiter verwendet werden. Es müssen weder spezielle neue kryptographische Algorithmen in die Steuerungseinrichtung integriert werden, noch müssen die verwendeten Protokolle und Implementierungen angepasst werden, um gegebenenfalls deutlich größere Post-Quanten Berechtigungsinformationen verarbeiten zu können.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur geschützten Übertragung von Daten zwischen einem ersten Gerät (100) und einem zweiten Gerät (200), mit den Verfahrensschritten:
- Aushandeln (S1) einer ersten Sicherheitsinformation (SKo) entsprechend einem ersten, Post-Quanten Kryptographie-Verfahren zwischen einer ersten Post-Quanten Funktionseinheit (102), die dem ersten Gerät (100) zugeordnet ist und einer zweiten Post-Quanten Funktionseinheit (202), die dem zweiten Gerät (200) zugeordnet ist,
- Aushandeln (S2) einer zweiten Sicherheitsinformation (SKi) entsprechend einem zweiten Kryptographie-Verfahren, wobei Daten des zweiten Kryptographie-Verfahrens, die zum Aushandeln der zweiten Sicherheitsinformation (SKi) ausgetauscht werden, mit der ersten Sicherheitsinformation (SKo) kryptographisch geschützt zwischen dem ersten Gerät (100) und dem zweiten Gerät (200) übertragen werden.

2. Verfahren nach Anspruch 1, wobei das erste Kryptographie-Verfahren und das zweite Kryptographie-Verfahren ein Authentisierungs- und/oder Schlüsselvereinbarungsverfahren sind.

3. Verfahren nach Anspruch 1 oder 2, wobei weitere Daten, die nach dem Aushandeln der zweiten Sicherheitsinformation (SKi) ausgetauscht werden (S3), vom ersten Gerät (100) und vom zweiten Gerät (200) mit der zweiten Sicherheitsinformation (SKi) verschlüsselt und zwischen dem ersten Gerät (100) und dem zweiten Gerät (200) übertragen werden.

4. Verfahren nach Anspruch 1 oder 2, wobei eine dritte Sicherheitsinformation (SKe) abhängig von der ersten Sicherheitsinformation (SKo) und abhängig von der zweiten Sicherheitsinformation (SKi) ermittelt wird und weitere Daten, die nach dem Aushandeln der zweiten Sicherheitsinformation (SKi) ausgetauscht werden (S3), vom ersten und vom zweiten Gerät mit der dritten Sicherheitsinformation (SKe) verschlüsselt und zwischen dem ersten Gerät (100) und dem zweiten Gerät übertragen werden.

5. Verfahren nach einem der vorhergehenden Ansprüche, wobei das zweite Kryptographie-Verfahren ein nicht-Post-Quanten Kryptographie-Verfahren ist.

6. Verfahren nach einem der vorhergehenden Ansprüche, wobei das zweite Kryptographie-Verfahren ein asymmetrisches Kryptographie-Verfahren ist und die ausgehandelte zweite Sicherheitsinformation (SKi) ein Sitzungsschlüssel, der sowohl im ersten als auch im zweiten Gerät zur Verschlüsselung von weiteren Daten verwendet wird.

7. Verfahren nach einem der vorhergehenden Ansprüche, wobei vor dem Aushandeln der zweiten Sicherheitsinformation (SKi) geprüft wird, ob das erste Kryptographie-Verfahren zur Aushandlung der ersten Sicherheitsinformation (SKo) verwendet wurde.

8. Verfahren nach einem der vorhergehenden Ansprüche, wobei beim ersten und/oder zweiten Kryptographie-Verfahren eine Identifizierungsdatenstruktur übermittelt wird, die Information über das jeweils andere Kryptographie-Verfahren enthält.

9. Erstes Gerät (100) zur geschützten Übertragung von Daten an ein zweites Gerät (200), umfassend
- eine Post-Quanten Funktionseinheit (102), die derart ausgebildet ist, eine erste Sicherheitsinformation (SKo) entsprechend einem ersten, Post-Quanten Kryptographie-Verfahren mit einer zweiten Post-Quanten Funktionseinheit (202), die einem zweiten Gerät (200) zugeordnet ist, auszuhandeln, und
- eine Steuerungseinrichtung (101), die derart ausgebildet ist, eine zweite Sicherheitsinformation (SKi) entsprechend einem zweiten Kryptographie-Verfahren mit einer zweiten Steuerungseinrichtung (202) des zweiten Geräts (200) auszuhandeln, und Daten des zweiten Kryptographie-Verfahrens, die zum Aushandeln der zweiten Sicherheitsinformation (SKi) ausgetauscht werden, mit der ersten Sicherheitsinformation (SKo) kryptographisch geschützt zwischen dem ersten Gerät (100) und dem zweiten Gerät (200) zu übertragen.

10. Erstes Gerät (100) nach Anspruch 9, das derart ausgebildet ist, das Verfahren gemäß den Ansprüchen 1 bis 8 auszuführen.

11. Post-Quanten-Einrichtung (300) zur geschützten Übertragung von Daten zwischen einem ersten Gerät (110) und einem zweiten Gerät (200), umfassend
- eine Post-Quanten Funktionseinheit (302), die mindestens einem ersten Gerät (200) zugeordnet ist und die derart ausgebildet ist, eine erste Sicherheitsinformation (SKo) entsprechend einem ersten, Post-Quanten Kryptographie-Verfahren mit einer zweiten Post-Quanten Funktionseinheit (202), die einem zweiten Gerät (200) zugeordnet ist, auszuhandeln, und
- eine Übertragungseinheit (301), die derart ausgebildet ist, Daten entsprechend dem Post-Quanten Kryptographie-Verfahren an das zweite Gerät (200) zu senden und/oder zu empfangen und die erste Sicherheitsinformation (SKo) an das zugeordnete erste Gerät (110) bereitzustellen.

12. Post-Quanten-Einrichtung nach Anspruch 10, die derart ausgebildet ist, das Verfahren gemäß den Ansprüchen 1 bis 8 auszuführen.

13. Anordnung zur geschützten Übertragung von Daten zwischen einem ersten Gerät (100) und einem zweiten Gerät (200), umfassend ein erstes Gerät (100), ein zweites Gerät (200) sowie jeweils eine dem ersten (100) bzw. dem zweiten Gerät (200) zugeordnete Post-Quanten-Funktionseinheit (102, 202, 302), die derart ausgebildet sind das Verfahren nach einem der Ansprüche 1 bis 8 durchzuführen.

14. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 8 durchzuführen. Zusammenfassung
